(19) Europäisches Patentamt / European Patent Office / Office européen des brevets

(11) **EP 1 730 881 B1**

(12) **EUROPEAN PATENT SPECIFICATION**

(45) Date of publication and mention
of the grant of the patent:
**13.10.2010 Bulletin 2010/41**

(21) Application number: **05718824.5**

(22) Date of filing: **30.03.2005**

(51) Int Cl.:
**H04L 9/32** (2006.01)

(86) International application number:
**PCT/IE2005/000034**

(87) International publication number:
**WO 2005/096545 (13.10.2005 Gazette 2005/41)**

(54) **VERIFICATION OF IDENTITY BASED SIGNATURES**

VERIFIKATION VON AUF IDENTITÄT BASIERENDEN SIGNATUREN

VERIFICATION DE SIGNATURES BASEES SUR L'IDENTITE

(84) Designated Contracting States:
**AT BE BG CH CY CZ DE DK EE ES FI FR GB GR HU IE IS IT LI LT LU MC NL PL PT RO SE SI SK TR**

(30) Priority: **30.03.2004 US 557374 P**

(43) Date of publication of application:
**13.12.2006 Bulletin 2006/50**

(73) Proprietor: **Dublin City University
Dublin 9 (IE)**

(72) Inventors:
• **McCULLAGH, Noel**
  **Dublin 4 (IE)**
• **SCOTT, Michael**
  **Dublin 3 (IE)**
• **COSTIGAN, Neil**
  **Carlow, County Carlow (IE)**

(74) Representative: **O'Brien, John Augustine et al
John A. O'Brien & Associates
Third Floor,
Duncairn House,
14 Carysfort Avenue
Blackrock, Co Dublin (IE)**

(56) References cited:
**WO-A-03/017559     WO-A-03/090429**

• **BONEH D ET AL: "Aggregate and verifiably-encrypted signatures from bilinear maps" 4 May 2003 (2003-05-04), LECTURE NOTES IN COMPUTER SCIENCE, SPRINGER VERLAG, NEW YORK, NY, US, PAGE(S) 416-432 , XP002302960 ISSN: 0302-9743 abstract page 416 - page 417 page 420 - page 421**

**Description**

<u>INTRODUCTION</u>

<u>Field of the Invention</u>

The invention relates to verification of identity-based cryptographic (IBC) signatures.

<u>Prior Art Discussion</u>

As is well known, traditional public key cryptography involves a sender ("Alice") using the public key of the receiver ("Bob") to encrypt a message destined for Bob. Bob's system decrypts the message using his private key. When Bob wishes to digitally sign a message he uses his private key to generate the signature. If the message with the digital signature is transmitted to Alice, her system can verify by using Bob's public key that the signature originated with Bob's system.

The task of obtaining a key pair has been most often undertaken by a system (say, Bob's) generating the key pair by executing software developed for the purpose. However, before it can be used for cryptography the public key must be approved. This involves a very tedious and time-consuming process akin to obtaining a physical passport. The reason for this is that the public key must with certainty be associated only with Bob. This is one of the reasons why public key cryptography has not as yet become as extensively used as some would have expected.

A long standing solution to this problem was thought to be identity based encryption, for which a practical implementation emerged in 2001. In IBE, a key generation centre (KGC) issues to Bob a key pair, in which the public key is generated from a common and fixed (for the KGC) set of domain parameters and a unique identity for Bob such as his email address or telephone number. When Alice wishes to transmit an encrypted message to Bob, her system accesses Bob's KGC and retrieves the domain parameters. Her system uses this and Bob's identity to determine Bob's public key, which is then used to encrypt the message, or to verify a signature from Bob. Thus, the KGC issues key pairs to users in a much more straight-forward manner and also performs the function of allowing any interested party to determine a person's public key much more easily.

The processor task of verifying an identity based signature is very slow as it is computationally expensive. Thus, at present there would be an unacceptable delay in verifying signatures on many mobile devices. Also, there would be a slow response time for a database management system to verify all records of a secure database such as a medical records database. This may, for example, involve verifying over 10,000 signatures. Also, a corporate server would have a large processor overhead imposed for verification of many signatures with a high volume of incoming email traffic.

WO03/090429 describes generation and verification of signatures, in which pairings are used to generate and verify multisignatures.

Boneh D. et al, "Aggregate and verifiably-encrypted signatures from bilinear maps" 4 May 2003, Lecture notes in Computer Science, Springer Verlag, New York, NY, US, Page(s) 416-432 describes an aggregate signature scheme.

WO03/01755 describes a method in which both sender and receiver compute a secret message key using identity-based information and a bilinear map.

The invention is therefore directed towards achieving verification of multiple signatures with fewer processor cycles.

<u>SUMMARY OF THE INVENTION</u>

According to the invention, there is provided a cryptographic method as set out in claim 1.

In one embodiment, for each element, the verification processor combines values of that element for all of the signatures to provide an aggregate element, and then performs a verification function using the aggregate element.

In another embodiment, the element values are combined by summing.

In one embodiment, said verification function is a bilinear map.

In one embodiment, the bilinear map maps between aggregate elements of one or two groups, to an element in one group.

In one embodiment, the public parameter Q. is multiplied by a randomly generated multiplier x to provide a secret component xQ of an element of each signature.

In a further embodiment, the random multiplier x is randomly generated for each signature.

In one embodiment, during signature generation the public parameter P is used in one element and the public component Q is used in another element.

In another embodiment, the public parameter Q is generated so that it is known, but that its discrete log with respect to any other point is unknown.

In one embodiment, Q is generated by the key generation centre.

In a further embodiment, the secret component xQ is added to an element which is the hash of the message and signature element R (h = hash(m,R)), multiplied by the private key (sA), the secret component xQ and the private key both being private separately but an element S (hsA + xQ) which is a sum of them is public.

In one embodiment, the multiplier x is applied to a public domain parameter P retrieved from the key generation centre to provide another component R = xP. In one embodiment, a group for a pair comprising the element S and a domain parameter P is mapped by the bilinear map to one group, and the elements S and P may be in separate groups or may be in the same group.

In one embodiment, a final pairing comprises a summation of element values where each element is:

a hash of a message and corresponding signature element R multiplied by the public keys, hiAi; and

a public domain parameter sP.

In one embodiment, the other pairing comprises a summation of elements of:

the signature component R= xP; and

the public parameter Q.

In a further embodiment, the verification processor retrieves the signatures from a secure database, and performs the verification on the signatures for database verification.

In one embodiment, the verification processor retrieves the signatures from a messaging system.

In another aspect, the invention provides a cryptographic system as set out in claim 18 a processor for performing batch verification of all of the signatures together according to any method as defined above.

In one embodiment, the signing processor comprises means for retrieving public domain parameters P and sP from the key generation centre.

In another embodiment, the signing processor comprises means for retrieving the public parameter Q from the key generation centre.

In one embodiment, the signing processor comprises means for retrieving from a key generation centre instructions for deriving the public parameter Q and for using said instructions to derive Q.

In another aspect, the cryptography system comprises:

a plurality of workstations including said signing processors and each workstation further comprising means for generating a data record together with a digital signature of a registered user who is responsible;

a database controller for writing said data records to a database, said records comprising update data together with a digital signature for the person responsible.

DETAILED DESCRIPTION OF THE INVENTION

Brief Description of the Drawings

The invention will be more clearly understood from the following description of some embodiments thereof, given by way of example only with reference to the accompanying drawings in which:-

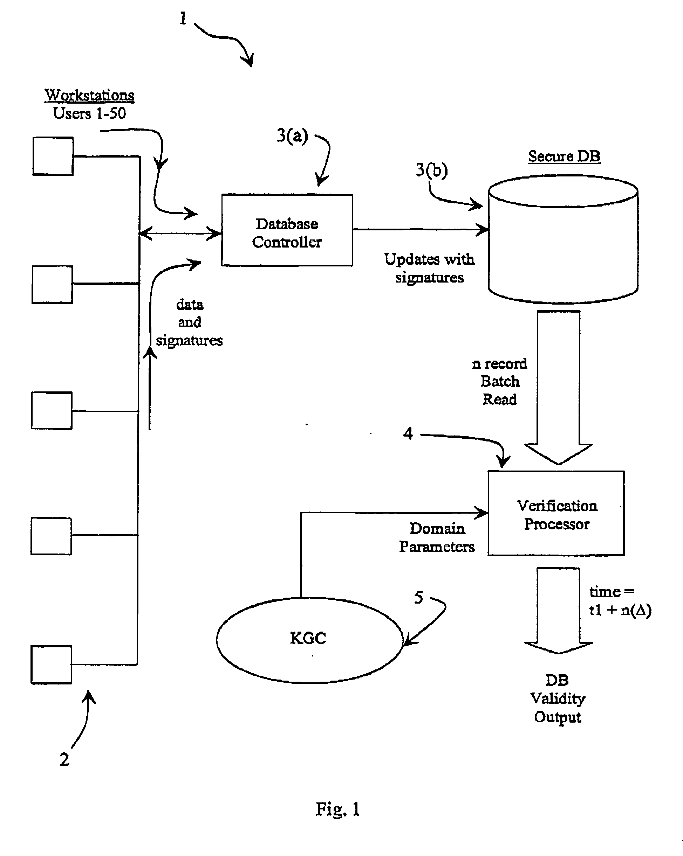

Fig. 1 is a block diagram of a database management system performing signature verification with a method of the invention.

Description of the Embodiments

Referring to Fig. 1 a database management system 1 comprises up to fifty or more workstations 2, each for a user. The environment may, for example, be a hospital and the system manages medical records in a secure manner. Each user has a private key issued by a KGC 5. A database controller 3(a) updates a secure database 3(b) with data and associated signatures generated by the user workstations 2. Thus every record of the secure database 3(b) has a signature to provide full traceability and non-repudiation of data edits/updates. It is important for the system 1 that the signatures " are verified on a regular basis, say every hour. Such a task would be extremely processor-intensive if the database 3(b) is large. However this is performed by a verification processor 4 of the system 1 in a much shorter time than heretofore, $t_1 + n(\Delta)$, where $t_1$ is the time for one verification, n is the number of signatures, and $\Delta$ is a time value which is a very small proportion of $t_1$ (less than 1%).

In more detail, consider:

Alice (one of the users of workstations 2) has a private key sA and a public key A.
The KGC 5 provides domain parameters P and sP.
The workstation 2 generates Alice's signature as:

(S, R, m), where

- R=xP
- S =hsA+xQ

- where hsA is Alice's private key multiplied by a hash of the message m and the signature element R (h = hash (m, R)),
- x is a random multiplier of Q and P, and
- Q is a known fixed point such as a hash of a constant string, which is public.
- R is xP where P is the domain parameter issued by the KGC 5, and
- m is the message (data).

Thus, in generation of a signature every workstation 2 incorporates a point xQ on the same elliptic curve as used by the KGC. The point Q may be the hash of a constant public string, or may be generated and distributed by the KGC.

To verify this signature, the processor 4 performs:

$$e(hsA + xQ, P) \overset{?}{=} e(hA, sP) * e(Q, R),$$

in which from left to right:

- sA and xQ are private, but (hsA + xQ) in combination is public as it is part of the signature,
- P is public,
- h is public,
- A is public,
- sP is public,
- Q is public, and
- xP is public.

The processor 5 can perform two verifications simultaneously (for users A & B) as follows with aggregation of elements:

$$e(S_A + S_B, P) \overset{?}{=} e(h_A A + h_B B, sP) * e(R_A + R_B, Q)$$

This can be generalized for n signatures to:

$$e(\sum_{i=1}^{n} Si, P) \overset{?}{=} e(\sum_{i=1}^{n} (hiAi), sP) * e(\sum_{i=1}^{n} Ri, Q)$$

By implementing this function the processor 4 of Fig. 1 can simultaneously verify all signatures in a batch. It will be noted that the processing involves predominantly hashing and summation operations to aggregate the element values, which are not processor-intensive.

The ability to achieve such fast batch verification is achieved because the signature incorporates Q as a public parameter which is common to all signatures. It is also achieved because there is a constant relationship between all public and private keys when using the Boneh and Franklin IBE key pair.

The following demonstrates the improvement in processing speed achieved. Pairings take approximately 3992 field multiplications, point doubling takes 8 field multiplications, point addition takes 11 field multiplications, point scalar multiplication takes approximately 2160 field multiplications, pairing exponentiation takes approximately 480 field multiplications. Thus, because the processor only needs to perform three pairings (3992 multiplications) instead of 3 x n pairings for verification of n signatures there is a considerable processor activity reduction. The additional pairings are replaced by point additions, which take only 11 field multiplications.

In more detail, the process makes use of the fact that in a certain class of identity based cryptography (as devised by Boneh and Franklin) there is a constant relationship between public and private keys. This relationship is that the private key is calculated as $sA$ for an identity $A$ and a fixed value $s$ known only to the KGC. The verification process makes use of this constant relationship to dramatically reduce the computation involved in the batch verification of certain identity based signature schemes.

The signature verification makes use of three groups over which the discrete logarithm problem is hard. We call these $G_1$, $G_2$ and $G_3$. It uses a bilinear map of the form e: $G_1$ x $G_2 \rightarrow G_3$, We describe the verification using a bilinear map of the form e(P,Q) = e(Q,P), but the scheme is not restricted to this case. An implementation of the system when e(P,Q) is not equal to e(Q,P) is clear to an expert in the field. They may all be groups of order p, but they need not be. We denote the set of invertable elements modulo p as Zp*. The signature verification uses two hash functions $H_{id}$: {0,1} * $\rightarrow G_1$ and $H_m$ : $G_1$ x {0,1} * $\rightarrow$ Zp* and the same setup algorithm as the well known Boneh and Franklin IBE scheme. $H_{id}$: {0,1}* $\rightarrow G_1$ is the Boneh and Franklin hash function for mapping identities (online identifiers) to elements of the group $G_1$ (points on the elliptic curve). It also makes use of an element in $G_1$, Q for which the discrete logarithm between this point and any other point in the system is unknown. In one embodiment Q is generated by hashing a fixed publicly known string using $H_{id}$. Alternatively, Q may be generated and distributed by the KGC.

Such a point is not used in other identity based signature mechanisms that the inventors are aware of and in fact makes this signature slightly slower than existing mechanisms for a single signature verification. However inclusion of this point allows signatures to be batch verified with improved processor efficiency and remaining secure.

The KGC issues two points, P and sP in $G_2$, $G_1$ and $G_2$ may be the same group, but not necessarily.

To sign a message, Alice generates a random value x in Zp*. Alice, using her private key (which we denote sA), the message (which we denote m), and the $H_m$ function does the following.

$$R = xP$$

$$h = H_m(m,R)$$

$$S = hsA + xQ$$

The signature on the message m is (R, S).

The verifier first calculates h using R (the first component of the signature) and m (the message). The verifier also calculates Alice's public key:

A = $H_{id}$(alice@company.com) (this value may be pre-computed)
h = $H_m$(m,R)

The signature is verified and accepted if the following equation holds:

$$e(S,P) = e(hA,sP) * e(Q,R)$$

To batch verify this signature we consider two signatures that are generated entirely separately by Alice and Bob. Alice and Bob do not collude in any way in the signature creation stage. Consider Alice and Bob, whose identities map to the points A and B respectively.

Alice generates a random $x_A$ in Zp*, and creates the signature as follows

$$R_A = x_A P$$

$$h_A = H_m(m_A, R_A)$$

$$S_A = h_A sA + x_A Q$$

Bob generates a random value $x_B$ and calculates the following signature

$$R_B = x_B P$$

$$h_B = H_m(m_B, R_B)$$

$$S_B = h_B sB + x_B Q$$

Now consider the individual verification of these signatures.

For Alice's signature we have

$A = H_{id}$(alice@company.com) (this value may be pre-computed)
$h_A = H_m(m_A, R_A)$
$d(S_A, P) = e(h_A A, sP) * e(R_A, Q)$

For Bob's signature we have

$B = H_{id}$(bob@company.com) (this value may be pre-computed)
$h_B = H_m(m_B, R_B)$
$e(S_B, P) = e(h_B B, sP) * e(R_B, Q)$

This takes six pairing operations (without pre-computation) to verify two signatures. However, in the invention there is much more efficient verification of both of these signatures simultaneously. This is done as follows:

$h_A = H_m(m_A, R_A)$
$h_B = H_m(m_B, R_B)$
$e(S_A + S_B, P) = e(h_A A + h_B B, sP) * e(R_A + R_B, Q)$

This equation will hold only if both of the individual signatures are valid. Any arbitrary number of signatures can be verified in this manner. This takes only three pairings (without pre-computation), to verify both signatures.

We use $A_i$ to denote the public key of signer i. We use $m_i$ to denote message i, and signature i is denoted as $(R_i, S_i)$. Generically these signatures are verified as:

for all i calculate $h_i = H_m(m_i, R_i)$

Now check if the following equality holds:

For all i, compute $S^* = \sum S_i$
For all i, compute $R^* = \sum R_i$
For all i, compute $A^* = \sum(h_i A_i)$
now check that the following equality holds, if it does accept all signatures
$e(S^*, P) = e(A^*, sP) * e(R^*, Q)$

An advantageous aspect is the summation of the elements in $G_1$ and $G_2$, and the inclusion of a point Q (for which the discrete log with respect to any other point is unknown). This allows m signatures by n different signers to be verified using only three pairing computations (or two with pre-computation). There are further improvements when multiple signatures from the same signer are present, and if $e(A_i, sP)$ is stored for any or all of the signers. These improvements will be clear to persons skilled in the field.

In summary, therefore the invention provides a cryptographic method whereby a recipient of several signed identity based messages adds elements of different / distinct signatures together before computing two or three bilinear maps on the sum of these signature elements in order to reduce the number of bilinear map operations needed to verify all of the signatures. By signature elements we mean the signature values R and S.

Another aspect is that there is a constant relationship between A (the public key - derived from the signer's identity), and the private key $sA$, where s is, or is derived from, the Key Generation Centre's (KGC)'s secret value. The KGC calculates and distributes private keys only to users to which they are assigned. Such users then have the ability to sign messages.

The public keys of all users are publicly available (or are easy to calculate from the user's online identifier — their email address etc) and the private key for each user is a secret known only to the usher to which it is assigned and the KGC.

It will also be appreciated that the KGC generates and distributes the public domain parameters, either via the Internet, utilising search engines, or any other suitable method. The public domain parameters are made available to all users of the system. By users we mean senders and receivers of signed messages.

Also, users have read-only access to the public domain parameters, as issued by the KGC.

It will be appreciated that the authenticity and accuracy of the public domain parameters are assured. This can be achieved by traditional e-commerce means or any other method deemed acceptable to the KGC.

The invention is not limited to the embodiments described but may be varied in construction and detail.

## Claims

1. A cryptographic method comprising the steps of:

    at least one signing processor (2) generating a plurality of identity-based digital signatures, using domain parameters P and private keys sA retrieved from a key generation centre,
    a verification processor (4) verifying all of the signatures together in a batch process by executing functions on elements of the signatures; **characterized in that**,
    there is a constant relationship between the private keys sA and their associated public keys A, and in which a public parameter Q common to all signatures is used together with the private key sA to generate each signature; and
    for each element the verification processor combines values of that element for all of the signatures to provide an aggregate element, and then performs a verification function using the aggregate elements.

2. A cryptographic method as claimed in claim 1, wherein the element values are combined by summing.

3. A cryptographic method as claimed in claims 1 or 2, wherein said verification function is a bilinear map.

4. A cryptographic method as claimed in claim 3, wherein the bilinear map maps between aggregate elements of one or two groups to an element in one group.

5. A cryptographic method as claimed in any preceding claim, wherein the public parameter Q is multiplied by a randomly generated multiplier x to provide a secret component xQ of an element of each signature.

6. A cryptographic method as claimed in claim 5, wherein the random multiplier x is randomly generated for each signature.

7. A cryptographic method as claimed in claims 5 or 6, wherein during signature generation the public parameter P is used in one element and the public component Q is used in another element.

8. A cryptographic method as claimed in any of claims 5 to 7, wherein the public parameter Q is generated so that it is known, but that its discrete log with respect to any other point is unknown.

9. A cryptographic method as claimed in any of claims 5 to 7, wherein Q is generated by the key generation centre.

10. A cryptographic method as claimed in any of claims 5 to 9, wherein the secret component xQ is added to an element which is the hash of the message and signature element R (h = hash(m,R)), multiplied by the private key (sA), the secret component xQ and the private key both being private separately but an element S (hsA + xQ) which is a sum of them is public.

11. A cryptographic method as claimed in any of claim 5 to 10, wherein the multiplier x is applied to a public domain parameter P retrieved from the key generation centre to provide another component R = xP.

12. A cryptographic method as claimed in claims 10 or 11, wherein a group for a pair comprising the element S and a domain parameter P is mapped by the bilinear map to one group, and the elements S and P may be in separate groups or may be in the same group.

13. A cryptographic method as claimed in claim 12, wherein a final pairing comprises a summation of element values where each element is:

> a hash of a message and corresponding signature element R multiplied by the public keys, hiAi; and
> a public domain parameter sP.

14. A cryptographic method as claimed in claim 13, wherein the other pairing comprises a summation of elements of:

> the signature component R = xP of claim 12; and
> the public parameter Q.

15. A cryptographic method as claimed in any preceding claim, wherein the verification processor retrieves the signatures from a secure database, and performs the verification on the signatures for database verification.

16. A cryptographic method as claimed in any of claims 1 to 14, wherein the verification processor retrieves the signatures from a messaging system.

17. A computer program product comprising software code for implementing a method of any preceding claim when executing on a digital computer.

18. A cryptographic system comprising:

> at least one signing processor (2) for generating a plurality of identity-based digital signatures using domain parameters P and private keys sA retrieved from a key generation centre (5), in which there is a constant relationship between the private keys sA and their associated public keys A, and in which a public parameter Q common to all signatures is used together with the private key sA to generate each signature; and
> a verification system (4) comprising:
>
> > a first interface to receive the digital signatures,
> > a second interface to retrieve cryptography data from a key generation centre (5), and
> > a verification processor for performing batch verification of all of the signatures together in a batch process by executing functions on elements of the signatures, in which for each element the verification processor combines values of that element for all of the signatures to provide an aggregate element, and then performs a verification function using the aggregate elements.

19. A cryptography system as claimed in claim 18, wherein the signing processor comprises means for retrieving public domain parameters P and sP from the key generation centres.

20. A cryptography system as claimed in claims 18 or 19, wherein the signing processor comprises means for retrieving the public parameter Q from the key generation centres.

21. A cryptography system as claimed in any of claims 18, 19, or 20, wherein the signing processor comprises means for retrieving from a key generation centre instructions for deriving the public parameter Q and for using said instructions to derive Q.

22. A cryptography system as claimed in any of claims 18 to 21, and further comprising:

a plurality of workstations (2) including said signing processors and each workstation further comprising means for generating a data record together with a digital signature of a registered user who is responsible; and
a database controller (3(a)) for writing said data records to a database (3(b)), said records comprising update data together with a digital signature for the person responsible.

**Patentansprüche**

1. Kryptografisches Verfahren, das die folgenden Schritte beinhaltet:

Erzeugen durch wenigstens einen Signaturprozessor (2) mehrerer identitätsbasierter digitaler Signaturen unter Verwendung von von einer Schlüsselerzeugungszentrale abgerufenen Domänenparametern P und privaten Schlüsseln sA,
Verifizieren durch einen Verifikationsprozessor (4) aller Signaturen zusammen in einem Batch-Prozess durch Ausführen von Funktionen an Elementen der Signaturen; **dadurch gekennzeichnet, dass**
eine konstante Beziehung zwischen den privaten Schlüsseln sA und deren assoziierten öffentlichen Schlüsseln A besteht, und wobei ein öffentlicher Parameter Q, der allen Signaturen gemeinsam ist, zusammen mit dem privaten Schlüssel sA verwendet wird, um jede Signatur zu erzeugen; und
der Verifikationsprozessor für jedes Element Werte dieses Elementes für alle Signaturen kombiniert, um ein Summenelement zu erzeugen, und dann eine Verifikationsfunktion unter Verwendung der Summenelemente ausführt.

2. Kryptografisches Verfahren nach Anspruch 1, wobei die Elementwerte durch Addieren kombiniert werden.

3. Kryptografisches Verfahren nach Anspruch 1 oder 2, wobei die genannte Verifikationsfunktion eine bilineare Abbildung ist.

4. Kryptografisches Verfahren nach Anspruch 3, wobei die bilineare Abbildung zwischen Summenelementen von einer oder zwei Gruppen auf ein Element in einer Gruppe abbildet.

5. Kryptografisches Verfahren nach einem der vorherigen Ansprüche, wobei der öffentliche Parameter Q mit einem zufällig erzeugten Multiplikator x multipliziert wird, um eine geheime Komponente xQ eines Elementes jeder Signatur bereitzustellen.

6. Kryptografisches Verfahren nach Anspruch 5, wobei der zufällige Multiplikator x zufällig für jede Signatur erzeugt wird.

7. Kryptografisches Verfahren nach Anspruch 5 oder 6, wobei der öffentliche Parameter P bei der Signaturerzeugung in einem Element und die öffentliche Komponente Q in einem anderen Element verwendet wird.

8. Kryptografisches Verfahren nach einem der Ansprüche 5 bis 7, wobei der öffentliche Parameter Q so erzeugt wird, dass er bekannt ist, aber dass sein diskreter Log mit Bezug auf jeden anderen Punkt unbekannt ist.

9. Kryptografisches Verfahren nach einem der Ansprüche 5 bis 7, wobei Q von der Schlüsselerzeugungszentrale erzeugt wird.

10. Kryptografisches Verfahren nach einem der Ansprüche 5 bis 9, wobei die geheime Komponente xQ zu einem Element addiert wird, das der Hash der Nachricht und des Signaturelementes R (h = hash(m,R)) multipliziert mit dem privaten Schlüssel (sA) ist, wobei die geheime Komponente xQ und der private Schlüssel separat beide privat sind, aber ein Element S (hsA + xQ), das eine Summe davon ist, öffentlich ist.

11. Kryptografisches Verfahren nach einem der Ansprüche 5 bis 10, wobei der Multiplikator x auf einen von der Schlüsselerzeugungszentrale abgerufenen öffentlichen Domänenparameter P angewendet wird, um eine andere Komponente R = xP bereitzustellen.

12. Kryptografisches Verfahren nach Anspruch 10 oder 11, wobei eine Gruppe für ein Paar, das das Element S und einen Domänenparameter P umfasst, von der bilinearen Abbildung auf eine Gruppe abgebildet wird und die Elemente S und P in separaten Gruppen oder in derselben Gruppe sein können.

13. Kryptografisches Verfahren nach Anspruch 12, wobei eine letzte Paarung eine Summierung von Elementwerten umfasst, wobei jedes Element wie folgt ist:

ein Hash einer Nachricht und eines entsprechenden Signaturelementes R multipliziert mit den öffentlichen Schlüsseln hiAi; und
ein öffentlicher Domänenparameter sP.

14. Kryptografisches Verfahren nach Anspruch 13, wobei die andere Paarung eine Summierung der folgenden Elemente umfasst:

die Signaturkomponente R = xP nach Anspruch 12; und
den öffentlichen Parameter Q.

15. Kryptografisches Verfahren nach einem der vorherigen Ansprüche, wobei der Verifikationsprozessor die Signaturen aus einer sicheren Datenbank abruft und die Verifikation an den Signaturen für eine Datenbankverifikation durchführt.

16. Kryptografisches Verfahren nach einem der Ansprüche 1 bis 14, wobei der Verifikationsprozessor die Signaturen aus einem Messaging-System abruft.

17. Computerprogrammprodukt, das Softwarecode zum Ausführen eines Verfahrens nach einem der vorherigen Ansprüche umfasst, wenn er auf einem digitalen Computer abgearbeitet wird.

18. Kryptografisches System, das Folgendes umfasst:

wenigstens einen Signaturprozessor (2) zum Erzeugen mehrerer identitätsbasierter digitaler Signaturen unter Verwendung von von einer Schlüsselerzeugungszentrale (5) abgerufenen Domänenparametern P und privaten Schlüssel sA, wobei eine konstante Beziehung zwischen den privaten Schlüsseln sA und deren assoziierten öffentlichen Schlüsseln A besteht, und wobei ein öffentlicher Parameter Q, der allen Signaturen gemeinsam ist, zusammen mit dem privaten Schlüssel sA verwendet wird, um jede Signatur zu erzeugen; und
ein Verifikationssystem (4), das Folgendes umfasst:

eine erste Schnittstelle zum Empfangen der digitalen Signaturen,
eine zweite Schnittstelle zum Abrufen von Kryptografiedaten aus einer Schlüsselerzeugungszentrale (5), und
einen Verifikationsprozessor zum Ausführen einer Batch-Verifikation aller Signaturen zusammen in einem Batch-Prozess durch Ausführen von Funktionen an Elementen der Signaturen, wobei der Verifikationsprozessor für jedes Element Werte dieses Elementes für alle Signaturen kombiniert, um ein Summenelement bereitzustellen, und dann eine Verifikationsfunktion mit den Summenelementen ausführt.

19. Kryptografiesystem nach Anspruch 18, wobei der Signaturprozessor Mittel zum Abrufen von öffentlichen Domänenparametern P und sP aus den Schlüsselerzeugungszentralen umfasst.

20. Kryptografiesystem nach Anspruch 18 oder 19, wobei der Signaturprozessor Mittel zum Abrufen des öffentlichen Parameters Q aus den Schlüsselerzeugungszentralen umfasst.

21. Kryptografiesystem nach Anspruch 18, 19 oder 20, wobei der Signaturprozessor Mittel zum Abrufen von Befehlen aus einer Schlüsselerzeugungszentrale zum Ableiten des öffentlichen Parameters Q und zum Verwenden der genannten Befehle zum Ableiten von Q umfasst.

22. Kryptografiesystem nach einem der Ansprüche 18 bis 21, das ferner Folgendes umfasst:

mehrere Workstations (2) einschließlich der genannten Signaturprozessoren, wobei jede Workstation ferner Mittel zum Erzeugen eines Datensatzes zusammen mit einer digitalen Signatur eines registrierten Benutzers umfasst, der veranwortlich ist; und
eine Datenbanksteuerung (3(a)) zum Schreiben der genannten Datensätze auf eine Datenbank (3(b)), wobei die genannten Datensätze Update-Daten zusammen mit einer digitalen Signatur für die verantwortliche Person umfassen.

**Revendications**

1. Procédé cryptographique comprenant les étapes suivantes :

génération par au moins un processeur de signatures (2) d'une pluralité de signatures numériques d'identité, en utilisant des paramètres de domaine P et des clés privées sA recouvrées auprès d'un centre de génération de clés,
vérification par un processeur de vérification (4) de toutes les signatures rassemblées dans un processus par lots en exécutant des fonctions sur des éléments des signatures ; **caractérisé en ce qu'**il existe une relation constante entre les clés privées sA et leur clés publiques associées A, et où un paramètre public Q commun à toutes les signatures est utilisé avec la clé privée sA pour générer chaque signature ; et pour chaque élément le processeur de vérification combine des valeurs de cet élément pour toutes les signatures afin de fournir un élément agrégé, puis effectue une fonction de vérification en utilisant les éléments agrégés.

2. Procédé cryptographique selon la revendication 1, dans lequel les valeurs d'éléments sont combinées par sommation.

3. Procédé cryptographique selon la revendication 1 ou 2, dans lequel ladite fonction de vérification est une carte bilinéaire.

4. Procédé cryptographique selon la revendication 3, dans lequel la carte bilinéaire met en correspondance des éléments agrégés d'un ou de deux groupes avec un élément dans un groupe.

5. Procédé cryptographique selon l'une quelconque des revendications précédentes, dans lequel le paramètre public Q est multiplié par un multiplicateur généré de façon aléatoire x pour fournir une composante secrète xQ d'un élément de chaque signature.

6. Procédé cryptographique selon la revendication 5, dans lequel le multiplicateur aléatoire x est généré de façon aléatoire pour chaque signature.

7. Procédé cryptographique selon la revendication 5 ou 6, dans lequel durant la génération de signatures, le paramètre public P est utilisé dans un élément et la composante publique Q est utilisée dans un autre élément.

8. Procédé cryptographique selon l'une quelconque des revendications 5 à 7, dans lequel le paramètre Q est généré de telle sorte qu'il soit connu, mais que son logarithme discret relativement à tout autre point soit inconnu.

9. Procédé cryptographique selon l'une quelconque des revendications 5 à 7, dans lequel Q est généré par le centre de génération de clés.

10. Procédé cryptographique selon l'une quelconque des revendications 5 à 9, dans lequel la composante secrète xQ est ajoutée à un élément qui est le hachage du message et de l'élément de signature R (h= hash(m,R)), multiplié par la clé privée (sA), la composante secrète xQ et la clé privée étant toutes les deux privées séparément mais un élément S (hsA + xQ) qui est leur somme est public.

11. Procédé cryptographique selon l'une quelconque des revendications 5 à 10, dans lequel le multiplicateur x est appliqué à un paramètre de domaine public P recouvré auprès du centre de génération de clés afin de fournir une autre composante R = xP.

12. Procédé cryptographique selon la revendication 10 ou 11, dans lequel un groupe d'une paire comprenant l'élément S et un paramètre de domaine P est mis en correspondance par la carte bilinéaire avec un groupe, et les éléments S et P peuvent se trouver dans des groupes séparés ou dans le même groupe.

13. Procédé cryptographique selon la revendication 12, dans lequel un pairage final comprend une sommation des valeurs d'éléments ou chaque élément est :

un hachage d'un message et d'un élément de signature correspondant R multiplié par les clés publiques, hiAi ; et un paramètre de domaine public sP.

**14.** Procédé cryptographique selon la revendication 13, dans lequel l'autre pairage comprend une sommation des éléments :

de la composante de signature R = xP de la revendication 12 ; et
du paramètre public Q.

**15.** Procédé cryptographique selon l'une quelconque des revendications précédentes, dans lequel le processeur de vérification recouvre les signatures depuis une base de données sécurisée, et exécute la vérification sur les signatures pour la vérification de base de données.

**16.** Procédé cryptographique selon l'une quelconque des revendications 1 à 14, dans lequel le processeur de vérification recouvre les signatures depuis un système de messagerie.

**17.** Produit de programme informatique comprenant un code logiciel pour mettre en oeuvre un procédé selon l'une quelconque des revendications précédentes lors de l'exécution sur un ordinateur numérique.

**18.** Système cryptographique comprenant
au moins un processeur de signature (2) pour générer une pluralité de signatures numériques d'identité en utilisant des paramètres de domaine P et des clés privées sA recouvrées auprès d'un centre de génération de clés (5), dans lequel une relation constante existe entre les clés privées sA et leur clés publiques associées A, et dans lequel un paramètre public Q commun à toutes les signatures est utilisé avec la clé privée sA pour générer chaque signature ; et
un système de vérification (4) comprenant :

une première interface pour recevoir les signatures numériques,
une seconde interface pour recouvrer des données cryptographique depuis un centre de génération de clés (5), et
un processeur de vérification pour effectuer une vérification par lots de toutes les signatures rassemblées dans un processus par lots en exécutant des fonctions sur des éléments des signatures, dans lequel pour chaque élément le processeur de vérification combine des valeurs de cet élément pour toutes les signatures afin de fournir un élément agrégé, puis effectue une fonction de vérification utilisant les éléments agrégés.

**19.** Système cryptographique selon la revendication 18, dans lequel le processeur de signature comprend un moyen pour recouvrer des paramètres du domaine public P et sP auprès des centres de génération de clés.

**20.** Système cryptographique selon la revendication 18 ou 19, dans lequel le processeur de signature comprend un moyen pour recouvrer le paramètre public Q auprès des centres de génération de clés.

**21.** Système cryptographique selon l'une quelconque des revendications 18, 19 ou 20, dans lequel le processeur de signature comprend un moyen pour recouvrer auprès d'un centre de génération de clés des instructions pour dériver le paramètre public Q et pour utiliser lesdites instructions pour dériver Q.

**22.** Système cryptographique selon l'une quelconque des revendications 18 à 21, et comprenant en outre :

une pluralité de stations de travail (2) comportant lesdits processeurs de signature et chaque station de travail comprenant en outre un moyen pour générer un enregistrement de données avec une signature numérique d'un utilisateur enregistré responsable ; et
une unité de commande de base de données (3(a)) pour écrire lesdits enregistrements de données dans une base de données (3(b)), lesdits enregistrements comprenant des données d'actualisation ainsi qu'une signature numérique de la personne responsable.

1

Workstations
Users 1-50

3(a)

3(b)

Secure DB

Database
Controller

Updates with
signatures

data
and
signatures

n record
Batch
Read

4

Verification
Processor

Domain
Parameters

KGC

5

time =
t1 + n(Δ)

DB
Validity
Output

2

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03090429 A

- WO 0301755 A

**Non-patent literature cited in the description**

- Aggregate and verifiably-encrypted signatures from bilinear maps. **Boneh D. et al.** Lecture notes in Computer Science. Springer Verlag, 04 May 2003, 416-432